# EUROPÄISCHE PATENTSCHRIFT

(11) **EP 2 444 208 B1**
(45) Veröffentlichungstag und Bekanntmachung des Hinweises auf die Patenterteilung: **02.01.2013**
(21) Anmeldenummer: 10013914.6
(22) Anmeldetag: 23.10.2010
(51) Int. Cl.: B25J 9/10

(54) **Handhabungsvorrichtung**
Handling device
Dispositif de manipulation

(43) Veröffentlichungstag der Anmeldung: 25.04.2012
(73) Patentinhaber: FESTO AG & Co. KG, 73734 Esslingen (DE)
(72) Erfinder: Bowyer, David, Angmering, Littlehampton West Sussex BN16 4LL (GB)
(74) Vertreter: Abel, Martin

(56) Entgegenhaltungen:
- WO-A1-87/07078
- DE-A1-102006 018 590
- DE-A1-102007 014 130
- US-B1- 6 297 611

## Beschreibung

Die Erfindung betrifft eine Handhabungsvorrichtung, mit zwei jeweils einen Innenschenkel und einen über ein Zwischengelenk daran angelenkten Außenschenkel aufweisenden Knickarmen, deren Innenschenkel mit Antriebsmitteln gekoppelt und durch diese Antriebsmittel unabhängig voneinander zu Schwenkbewegungen um eine gemeinsame Hauptachse antreibbar sind, wobei jeder Außenschenkel über ein zum zugeordneten Zwischengelenk beabstandetes Außengelenk an einem gemeinsam zugeordneten Endeffektorträger angelenkt ist, derart, dass der Endeffektorträger durch von den Antriebsmitteln hervorgerufene Schwenkbewegungen eines oder beider Innenschenkel in einer zu der Hauptachse rechtwinkeligen Handhabungsebene zweidimensional verlagerbar und positionierbar ist.

Eine aus der DE 10 2007 014 130 A1 bekannte Handhabungsvorrichtung dieser Art verfügt über zwei zweischenkelige Knickarme mit jeweils einem Innenschenkel und einem daran angelenkten Außenschenkel. Die Innenschenkel sind mittels zweier Antriebsmotoren unabhängig voneinander zu Schwenkbewegungen um eine gemeinsame Hauptachse antreibbar, während die Außenschenkel an einem Endeffektorträger angelenkt sind, der einen als Greifer ausgebildeten Endeffektor trägt. Durch aufeinander abgestimmtes Verschwenken der beiden Innenschenkel der Knickarme lässt sich der Endeffektorträger mit beliebiger Handhabungsbahn in einer zu der Hauptachse rechtwinkeligen Handhabungsebene verlagern und positionieren. Mechanische Kulissenführungsmittel sind entbehrlich, der Verlauf der Handhabungsbahn resultiert allein aus der winkelmäßigen Verlagerung der Innenschenkel, die sowohl gleichzeitig als auch getrennt voneinander verschwenkbar sind, und zwar mit sowohl gleichen als auch unterschiedlichen Schwenkgeschwindigkeiten.

Eine gewisse Unzulänglichkeit der bekannten Handhabungsvorrichtung besteht allerdings darin, dass das Gewicht des Endeffektorträgers und aller an dem Endeffektorträger angeordneten Komponenten von den Knickarmen und den diesen zugeordneten Gelenken aufgenommen werden müssen. Hohe Lagerbelastungen sind die Folge und damit verbunden eine begrenzte radiale Reichweite des Endeffektorträgers. Werden die Lagermittel zur Vergrößerung der radialen Reichweite des Endeffektorträgers voluminöser gestaltet, erhöht sich die zu bewegende Masse und mithin auch das Trägheitsmoment der zu bewegenden Struktur, was sich nachteilig auf die Arbeitsgeschwindigkeit auswirkt.

Aus der DE 103 14 818 B4 ist ein zum Umpositionieren von Teilen dienendes Handhabungsgerät bekannt, bei dem die Bewegung eines Endeffektorträgers durch einen zu einer Schwenkbewegung antreibbaren Schwenkarm und eine mechanische Kulissenführung erzeugt wird. Die Kulissenführung bewirkt zwar eine gewisse Querabstützung des Endeffektorträgers, schränkt aber gleichzeitig die Bewegungsmöglichkeiten des Endeffektorträgers ein, der stets nur eine vorbestimmte und nicht variable Handhabungsbahn durchlaufen kann.

Es ist die Aufgabe der vorliegenden Erfindung, Maßnahmen zu treffen, auf deren Grundlage eine Handhabungsvorrichtung der eingangs genannten Art mit hoher Arbeitsgeschwindigkeit und dennoch geringer struktureller Belastung betrieben werden kann.

Diese Aufgabe wird dadurch gelöst, dass der Endeffektorträger durch eine zusätzlich zu den Knickarmen vorhandene Abstützeinrichtung quer zu der Handhabungsebene abgestützt ist, wobei diese Abstützeinrichtung einen relativ zu den Innenschenkeln der Knickarme bezüglich der Hauptachse frei drehbar gelagerten Stützkörper aufweist und eine Linearführungseinrichtung enthält, über die der Endeffektorträger in bezüglich der Hauptachse radialer Richtung linear verschiebbar an dem Stützkörper gelagert ist.

Auf diese Weise ist der Endeffektorträger weiterhin nach dem Vorbild der DE 10 2007 014 130 A1 sehr variabel zweidimensional innerhalb einer zu der Hauptachse rechtwinkeligen Handhabungsebene verfahrbar, kann aber zugleich sehr hohe Lasten transportieren und/oder mit bezüglich der Hauptachse großer radialer Reichweite betrieben werden, ohne eine Überlastung der Knickarmstruktur und insbesondere der Gelenke der Knickarmstruktur hervorzurufen. Bei all seinen Bewegungen ist der Endeffektorträger durch die zusätzliche Abstützeinrichtung stets in einer zu der Handhabungsebene rechtwinkeligen Richtung abgestützt, so dass bei horizontaler Ausrichtung der Handhabungsebene das Gewicht des Endeffektorträgers und der an diesen angeordneten Komponenten maßgeblich von der Abstützeinrichtung aufgenommen wird und die Knickarmstruktur dementsprechend eine erhebliche Entlastung von Gewichtskräften erfährt. Die Abstützeinrichtung ermöglicht insbesondere eine völlige Entlastung der Knickarmstruktur von Gewichtskräften des Endeffektorträgers und daran angeordneter Komponenten, so dass die Knickarmstruktur optimal hinsichtlich ihres Antriebszweckes ausgelegt werden kann. Wird der Endeffekturträger durch die Knickarme zu einer Schwenkbewegung um die Hauptachse angetrieben, macht die Abstützeinrichtung diese Schwenkbewegung mit, da sie diesbezüglich mit dem Endeffektorträger bewegungsgekoppelt ist. Bei einer bezüglich der Hauptachse rein radialen Bewegung des Endeffektorträgers oder bei einer überlagerten Schwenk- und Linearbewegung des Endeffektorträgers findet (auch) eine bezüglich der Hauptachse radiale Linearbewegung des Endeffektorträgers statt, bei der die Linearführungsmittel ihrer linearen Führungsaufgabe nachkommen. In allen Fällen kann die Abstützeinrichtung auf Grund ihrer von den Knickarmen unabhängigen freien Schwenkbeweglichkeit, deren Schwenkachse mit derjenigen der beiden Innenschenkel zusammenfällt, den Endeffektorträger stets wirksam abstützen, so dass die Knickarmstruktur gewichtsmäßig entlastet ist.

Wenn die Innenschenkel jeweils um mindestens 360° um die Hauptachse verschwenkbar sind, kann der Endeffektorträger und ein an diesem angeordneter Endeffektor problemlos einen Arbeitsbereich von mindestens 360° abdecken.

Auf Grund der abstützenden Wirkung der Abstützeinrichtung und der daraus resultierenden geringen Biegebelastung der Knickarme, können selbige sehr leichtgewichtig ausgebildet werden, was dem Beschleunigungsverhalten zugutekommt.

Ein weiterer Vorteil der Handhabungsvorrichtung besteht darin, dass die zur Positionierung des Endeffektorträgers in der Handhabungsebene erforderlichen Antriebsmittel nicht Bestandteile der bewegten Massen sind, was einen hoch dynamischen Betrieb der Handhabungsvorrichtung begünstigt. Bei alledem ermöglicht die Handhabungsvorrichtung eine exakte Positionierung des Endeffektorträgers, so dass die Handhabungsvorrichtung ungeachtet ihrer hohen Arbeitsgeschwindigkeit ohne Weiteres für Präzisionsarbeiten einsetzbar ist. Vorteilhafte Weiterbildungen der Erfindung gegen aus den Unteransprüchen hervor.

Die Linearführungseinrichtung verfügt zweckmäßigerweise über zwei relativ zueinander linear verschiebbar miteinander in Eingriff stehende Linearführungskomponenten, von denen die eine als Führungsschiene und die andere als die Führungsschiene zweckmäßigerweise zumindest partiell umschließender Führungsschuh ausgebildet ist. Eine dieser Linearführungskomponenten befindet sich am Stützkörper, die andere am Endeffektorträger.

Bei einer bevorzugten Gestaltung ist die Führungsschiene ortsfest am Stützkörper angeordnet, von dem sie nach Art eines Auslegers frei endend wegragt, wobei der Führungsschuh am Endeffektorträger angeordnet ist und sich folglich bei der Linearbewegung des Endeffektorträgers in bezüglich der Hauptachse radialer Richtung entlang der Führungsschiene bewegt.

Bei einer alternativen Ausführungsform ist die Führungsschiene ortsfest am Endeffektorträger angeordnet und der Führungsschuh befindet sich am Stützkörper. Hier führt die Führungsschiene bei der bezüglich der Hauptachse radialen Linearbewegung des Endeffektorträgers eine Linearbewegung bezüglich des Stützkörpers aus, wobei sie zweckmäßigerweise den Stützkörper je nach Position des Endeffektorträgers mit einem unterschiedlichen Anteil seiner Länge durchsetzt. Hier kann also beispielsweise eine Position des Endeffektorträgers eingestellt werden, bei der er sich auf einer Seite des Stützkörpers befindet, während die Führungsschiene den Endeffektorträger durchsetzt oder passiert und auf der entgegengesetzten Seite über den Endeffektorträger hinausragt.

Eine besonders kompakte Ausgestaltung der Handhabungsvorrichtung ergibt sich, wenn der Stützkörper in Achsrichtung der Hauptachse zwischen den Innenschenkeln der beiden Knickarme angeordnet ist. Somit ist also insbesondere eine Bauform möglich, bei der der Stützkörper auf axial einander entgegengesetzten Seiten von jeweils einem der beiden Knickarme flankiert ist.

Die für den Schwenkantrieb der Innenschenkel verantwortlichen Antriebsmittel verfügen zweckmäßigerweise über zwei Drehantriebsstränge, die jeweils rotativ antreibbar sind. Ein erster dieser beiden Drehantriebsstränge ist drehfest mit dem Innenschenkel des einen, ersten Knickarmes verbunden, während der zweite Drehantriebsstrang mit dem Innenschenkel des anderen, zweiten Knickarmes drehfest verbunden ist. Auf diese Weise hat die rotative Bewegung jedes Drehantriebsstranges die gleichzeitige Schwenkbewegung des an ihm angeordneten Innenschenkels zur Folge. Die beiden Drehantriebsstränge verlaufen zweckmäßigerweise koaxial zu der Hauptachse und sind, zur variablen Positionierung des Endeffektorträgers, unabhängig voneinander relativ zum Stützkörper der Abstützeinrichtung drehbar.

Die Antriebsmittel enthalten zweckmäßigerweise zwei Drehantriebseinrichtungen, die mit jeweils einem der beiden Drehantriebsstränge in Drehantriebsverbindung stehen, derart, dass die beiden Drehantriebsstränge durch die Drehantriebseinrichtungen unabhängig voneinander rotativ antreibbar sind. Die beiden Drehantriebseinrichtungen sind zweckmäßigerweise elektrisch betätigbar ausgebildet und beinhalten vorzugsweise jeweils einen Elektromotor, insbesondere einen Servomotor, der eine sehr genaue rotative Positionierung des zugeordneten Drehantriebsstranges ermöglicht.

Die beiden Drehantriebsstränge, beispielsweise jeweils nach Art einer Welle ausgebildet, sind vorzugsweise unabhängig voneinander an dem Stützkörper drehbar gelagert. Auf diese Weise sind die beiden Drehantriebsstränge vorzugsweise sowohl radial als auch axial an dem Stützkörper abgestützt, wodurch der Stützkörper seinerseits eine Abstützung erfährt, wobei aber dem Stützkörper die vorteilhafte Möglichkeit verbleibt, sich entsprechend der winkelmäßigen Verlagerung des Endeffektorträgers relativ zu jedem der beiden Drehantriebsstränge beliebig zu verdrehen.

Eine bevorzugte Art der Lagerung der Drehantriebsstränge sieht vor, dass jeder Drehantriebsstrang mit einem Wellenstutzen in den Stützkörper eintaucht, wobei jeder Wellenstutzen mittels einer Drehlagereinrichtung, die insbesondere als Wälzlagereinrichtung ausgebildet ist, bezüglich dem Stützkörper drehgelagert ist.

Die Drehlagerung der beiden Drehantriebsstränge erfolgt zweckmäßigerweise im Bereich einander in Achsrichtung der Hauptachse entgegengesetzt orientierter Seiten des Stützkörpers. Vorzugsweise greifen die beiden Drehantriebsstränge mit Wellenstutzen von einander entgegengesetzten Seiten her in den Stützkörper ein.

Zur Fixierung am Einsatzort ist die Handhabungsvorrichtung zweckmäßigerweise mit wenigstens zwei Halteeinrichtungen ausgestattet. An jeder Halteeinrichtung befinden sich zweckmäßigerweise geeignete Befestigungsmittel, um insbesondere eine Schraubbefestigung an einer Tragstruktur, beispielsweise in Form eines Maschinengestells, vornehmen zu können. Es ist von Vorteil, wenn zwei voneinander unabhängige Halteeinrichtungen vorhanden sind, in denen jeweils einer der beiden Drehantriebsstränge drehbar gelagert ist. Ferner ist es von Vorteil, wenn jede Halteeinrichtung Bestandteil einer Drehantriebseinrichtung ist, die dem rotativen Antrieb des zugeordneten Drehantriebsstranges dient. Oder anders ausgedrückt besteht die Möglichkeit, die für den Drehantrieb der Drehantriebsstränge dienenden Drehantriebseinrichtungen jeweils so auszubilden, dass sie auch die Funktion einer der Fixierung der Handhabungsvorrichtung am Einsatzort dienenden Halteeinrichtung übernehmen.

Eine besonders vorteilhafte Weiterbildung der erfindungsgemä-βen Handhabungsvorrichtung sieht Mittel vor, die es ermöglichen, den Endeffektorträger insgesamt dreidimensional zu verlagern, das heißt nicht nur in der oben schon erwähnten Handhabungsebene, sondern auch noch in Richtung einer mit der Hauptachse zusammenfallenden dritten Achse. Bezeichnet man ein die Handhabungsebene aufspannendes Koordinatensystem als x-y-Koordinatensystem, so lässt sich die dritte Bewegungsachse als z-Achse bezeichnen.

Um dies zu ermöglichen, sieht eine vorteilhafte Bauform vor, dass zumindest die Abstützeinrichtung, die Knickarme und der Endeffektorträger zu einer Hubeinheit zusammengefasst sind, die einheitlich in Achsrichtung der Hauptachse verschiebbar und positionierbar ist. Diese Bewegungsmöglichkeit in Achsrichtung der Hauptachse ist zweckmäßigerweise unabhängig von den Bewegungsmöglichkeiten in der Handhabungsebene, wobei beliebige Überlagerungen der Bewegungen möglich sind, um die schon angesprochene dreidimensionale Verfahrbarkeit und Positionierbarkeit zu ermöglichen.

Wenn die Handhabungsvorrichtung über mit den Innenschenkeln der Knickarme drehfest verbundene Drehantriebsstränge verfügt, wie weiter oben erläutert wurde, ist es zweckmäßig, auch diese Drehantriebsstränge in die Hubeinheit zu integrieren, so dass sie deren Linearbewegung in Achsrichtung der Hauptachse mitmachen können.

Ist jeder Drehantriebsstrang an oder in einer zur Fixierung der Handhabungsvorrichtung am Einsatzort dienenden Halteeinrichtung drehgelagert, sieht eine vorteilhafte Bauform vor, dass jeder Drehantriebsstrang in der ihm zugeordneten Halteeinrichtung in der Längsrichtung des Drehantriebsstranges verschiebbar gelagert ist. Somit kann die Hubeinheit einschließlich der Drehantriebsstränge ihre Hubbewegungen relativ zu den Halteeinrichtungen ausführen, wobei auch hier, wie oben schon dargelegt, die Möglichkeit besteht, jede Halteeinrichtung mit einer Drehantriebseinrichtung zu kombinieren.

Zur Erzeugung der Hubbewegung der Hubeinheit ist die Handhabungsvorrichtung zweckmäßigerweise mit mindestens einem Hubantrieb ausgestattet, wobei dieser Hubantrieb mit einer der zweckmäßigerweise vorhandenen Drehantriebseinrichtungen zu einer Antriebsbaugruppe zusammengefasst sein kann.

Es besteht die vorteilhafte Möglichkeit, zur Erzeugung der Hubbewegung auf zwei unabhängig voneinander betreibbare Hubantriebe zurückzugreifen, die zweckmäßigerweise auf voneinander abweichenden Antriebskonzepten basieren. Ein Hubantrieb ist zweckmäßigerweise pneumatisch betätigbar ausgebildet, während der zweite Hubantrieb als elektrisch betätigbarer Hubantrieb konzipiert sein kann. Hierbei wird der pneumatische Hubanrieb vorzugsweise zumindest hauptsächlich für den Gewichtsausgleich der zu bewegenden Hubeinheit eingesetzt, während der elektrische Hubantrieb für die dynamischen Aktivitäten und insbesondere für das genaue Positionieren in der Hubrichtung genutzt wird. Hierbei kann auf einen relativ kleindimensionierten elektrischen Hubantrieb zurückgegriffen werden, weil er durch den pneumatischen Hubantrieb antriebsmäßig entlastet wird. Selbstverständlich kann auf nur einen einzigen Hubantrieb zurückgegriffen werden, wenn dieser entsprechend dimensioniert ist und die für den Anwendungsfall angestrebte Positioniergenauigkeit aufweist.

Nachfolgend wird die Erfindung anhand der beiliegenden Zeichnung näher erläutert. In dieser zeigen:

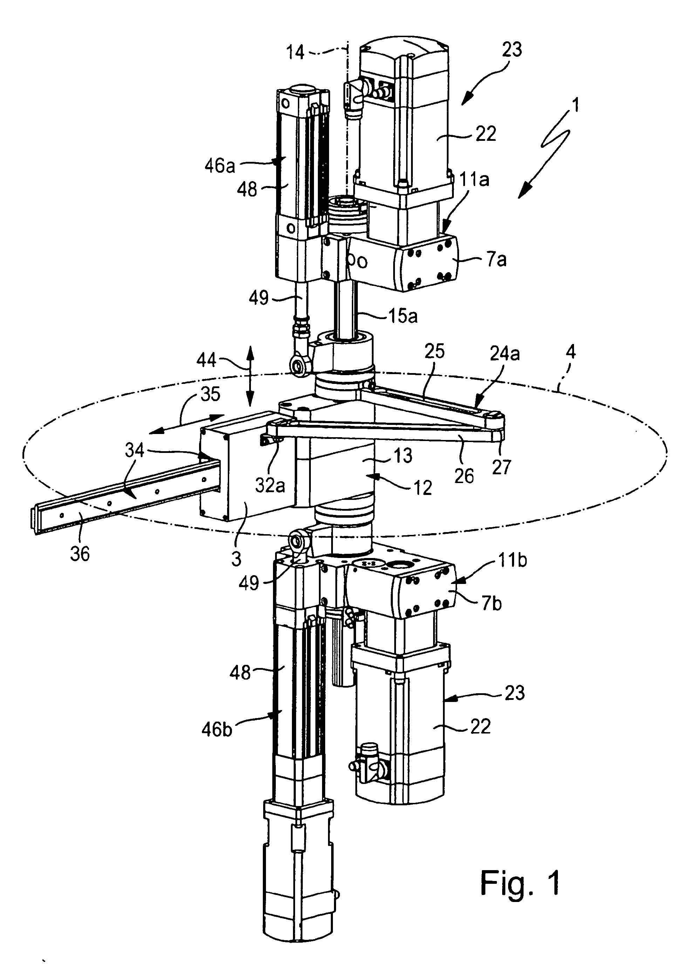

- Figur 1: eine bevorzugte Bauform der erfindungsgemäßen Handhabungsvorrichtung in perspektivischer Darstellung,

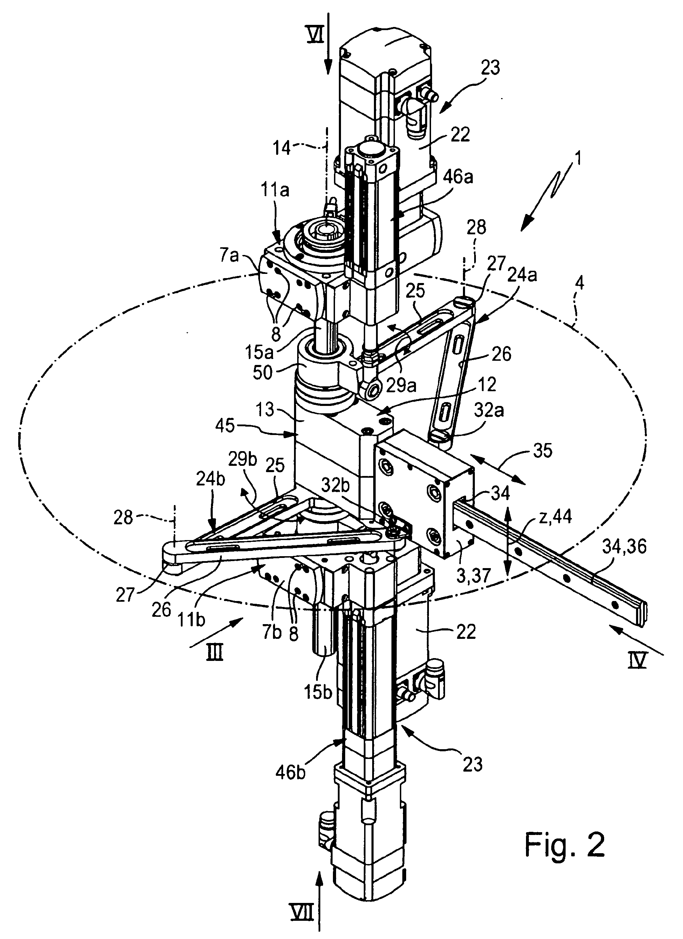

- Figur 2: die Handhabungsvorrichtung aus Figur 1 in wiederum perspektivischer Darstellung aus einem anderen Blickwinkel,
- Figur 3: eine Seitenansicht der Handhabungsvorrichtung mit Blickrichtung gemäß Pfeil III aus Figur 2, wobei strichpunktiert Bestandteile einer Tragstruktur angedeutet sind, an der die Handhabungsvorrichtung am Einsatzort befestigt ist,

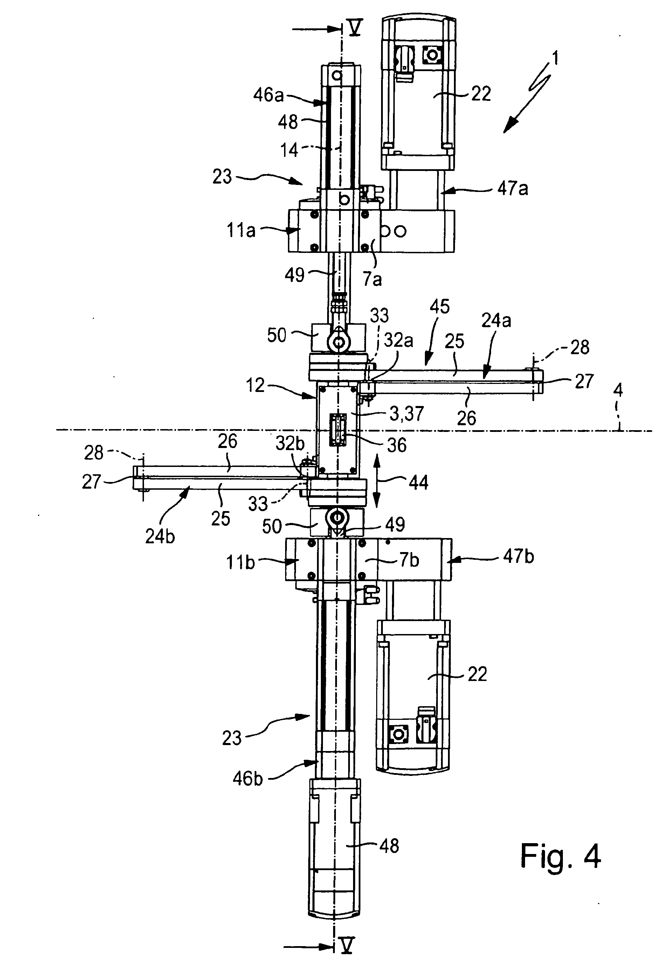

- Figur 4: eine Vorderansicht der Handhabungsvorrichtung mit Blickrichtung gemäß Pfeil IV aus Figur 2,

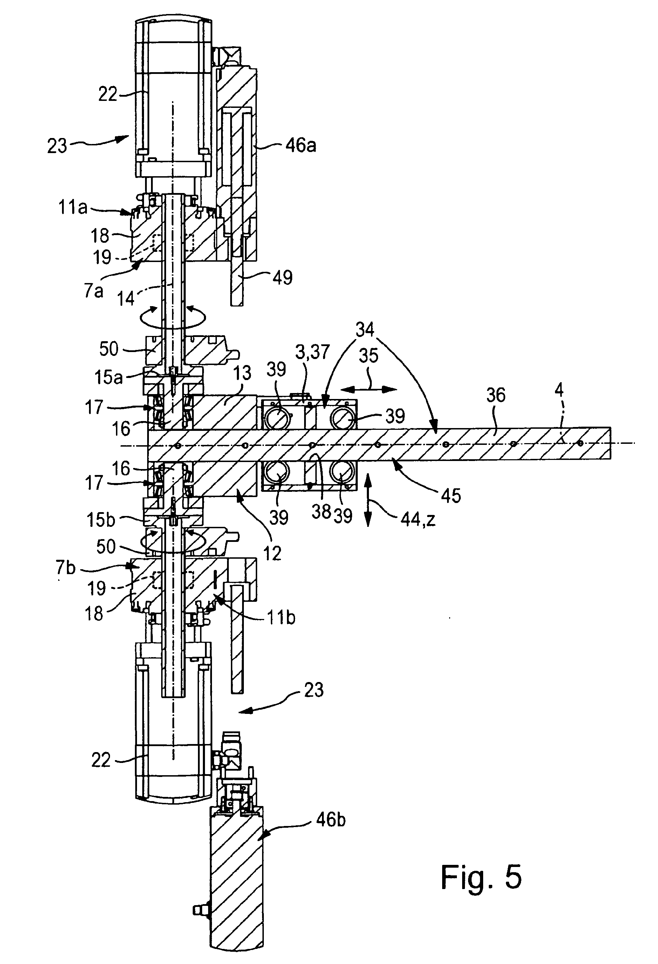

- Figur 5: einen Längsschnitt durch die Handhabungsvorrichtung gemäß Schnittlinie V-V aus Figur 4
- Figur 6: eine Draufsicht von oben auf die Handhabungsvorrichtung mit Blickrichtung gemäß Pfeil VI aus Figur 2, und
- Figur 7: eine Unteransicht der Handhabungsvorrichtung mit Blickrichtung gemäß Pfeil VII aus Figur 2.

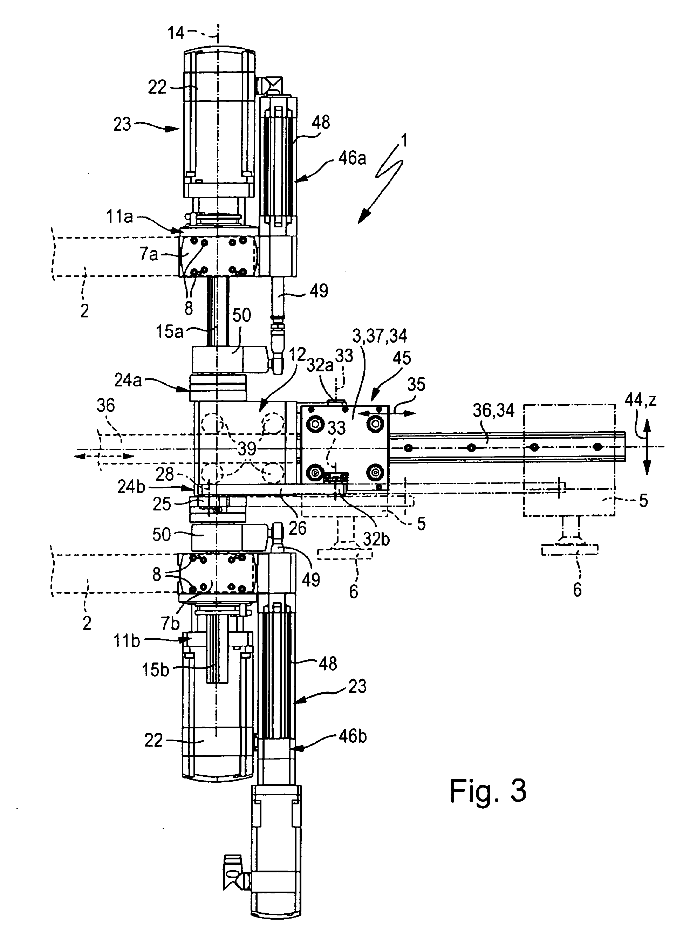

Die Figur 3 zeigt gestrichelt eine Ausstattungsvariante der Handhabungsvorrichtung mit einer anderen Art von Linearführung für den Endeffektorträger.

Die Handhabungsvorrichtung ist in der Zeichnung insgesamt mit Bezugsziffer 1 bezeichnet. Bei 2 sind Bestandteile einer beliebigen, am Einsatzort der Handhabungsvorrichtung vorhandenen Tragstruktur angedeutet, an der die Handhabungsvorrichtung 1 in bevorzugt lösbarer Weise festlegbar oder festgelegt ist. Bei dieser Tragstruktur 2 handelt es sich beispielsweise um ein Traggestell oder um einen Tragrahmen, das bzw. der an einem Fundament verankert sein kann.

Die Handhabungsvorrichtung 1 verfügt über einen Endeffektorträger 3, der in einer im Regelfall horizontal ausgerichteten Handhabungsebene 4 stufenlos bewegbar und positionierbar ist. Die beispielhafte Handhabungsvorrichtung 1 ist zudem so ausgestaltet, dass der Endeffektorträger 3 auch noch in einer zu der Handhabungsebene 4 rechtwinkeligen Richtung - im Folgenden auch als z-Richtung bezeichnet - stufenlos verfahrbar und positionierbar ist. Auf diese Weise lässt sich der Endeffektorträger 3 insgesamt dreidimensional verfahren und positionieren.

Der Endeffektorträger 3 ist ausgebildet, um an ihm einen an die jeweils auszuführende Handhabungsaufgabe angepassten Endeffektor 5 in bevorzugt lösbarer Weise befestigen zu können. Das Ausführungsbeispiel zeigt eine exemplarische Ausstattung mit einem als Greifer ausgebildeten Endeffektor 5, der dazu dient, Gegenstände wie Werkstücke oder dergleichen zwischen verschiedenen Örtlichkeiten umzupositionieren. Ein solcher umzupositionierender Gegenstand ist in der Zeichnung bei 6 angedeutet.

Als Greifer kann beispielsweise ein Sauggreifer oder ein Backengreifer eingesetzt werden. Seine Betätigung erfolgt beispielsweise mittels Fluidkraft und/oder elektrisch.

Entsprechend der auszuführenden Handhabungsaufgabe kann die Handhabungsvorrichtung 1 auch mit einem anderen Endeffektor 5 ausgestattet sein. Es könnte sich bei diesem Endeffektor 5 beispielsweise um eine zum Punktschweißen einsetzbare Schweißzange handeln.

Die Handhabungsvorrichtung 1 weist mindestens eine und beim Ausführungsbeispiel zwei Halteeinrichtungen 7a, 7b auf, die jeweils über mindestens eine Befestigungsschnittstelle 8 verfügen, unter deren Mitwirkung die Handhabungsvorrichtung 1 an der schon erwähnten Tragstruktur 2 befestigbar ist.

Vorzugsweise ist jede Halteeinrichtung 7a, 7a Bestandteil jeweils einer von zwei Drehantriebseinrichtungen, die im Folgenden als erste und zweite Drehantriebseinrichtungen 11a, 11b bezeichnet werden. Mit Hilfe dieser Drehantriebseinrichtungen 11a, 11b kann der Endeffektorträger 3 innerhalb der Handhabungsebene 4 verlagert werden.

Der Endeffektorträger 3 ist durch eine Abstützeinrichtung 12 quer zu der Handhäbungsebene 4 und dabei insbesondere in zu der Handhabungsebene 4 rechtwinkeliger Richtung abgestützt. Auf diese Weise kann er mit hohen Traglasten bestückt werden.

Ein Bestandteil der Abstützeinrichtung 12 ist ein bevorzugt blockförmig gestalteter Stützkörper 13. Dieser Stützkörper 13 ist bezüglich den beiden Halteeinrichtungen 7a, 7b um eine zu der Handhabungsebene 4 rechtwinkelige Hauptachse 14 frei drehbar. Exemplarisch erstreckt sich die Hauptachse 14 in der oben erwähnten z-Richtung.

Zur Realisierung der genannten Drehlagerung ist der Stützkörper 13 an sowohl einem ersten als auch einem zweiten Drehantriebsstrang 15a, 15b drehbar gelagert, wobei die Längsachsen der Drehantriebsstränge 15a, 15b mit der Hauptachse 14 zusammenfallen und mithin koaxial zueinander ausgerichtet sind. Der Stützkörper 13 sitzt zweckmäßigerweise zwischen den beiden Drehantriebssträngen 15a, 15b, die sich mithin ausgehend vom Stützkörper 13 in einander entgegengesetzte Richtungen erstrecken.

Jeder Drehantriebsstrang 15a, 15b ist einerseits im Stützkörper 13 und andererseits, mit axialem Abstand dazu, in einer der beiden Halteeinrichtungen 7a, 7b drehbar gelagert.

Im konkreten Fall des Ausführungsbeispiels, bei dem die Halteeinrichtungen 7a, 7b jeweils einer Drehantriebseinrichtung 11a, 11b zugeordnet sind, bildet jeder Drehantriebsstrang 15a, 15b die rotativ antreibbare Abtriebswelle von jeweils einer der beiden Drehantriebseinrichtungen 11a, 11b oder ist drehfest mit einer solchen Abtriebswelle verbunden.

Mithin kann jeder Drehantriebsstrang 15a, 15b durch die ihm zugeordnete Drehantriebseinrichtung 11a oder 11b zu einer Drehbewegung um eine mit der Hauptachse 14 zusammenfallende Drehachse angetrieben werden, wobei allerdings mangels jeglicher Drehmitnahmeverbindung der Stützkörper 13 von den rotierenden Drehantriebssträngen 15a, 15b nicht mitgenommen wird. Grundsätzlich ist der Stützkörper 13 so angeordnet, dass er relativ zu den beiden Drehantriebseinrichtungen 11a, 11b frei drehbar ist. Hierbei kann der Stützkörper 13 einen Drehwinkel von 360° abdecken, wobei eine beliebige Anzahl von Rotationen in jedweder Rotationsrichtung möglich wäre.

Wie schon angedeutet, sind die beiden Drehantriebsstränge 11a, 11b vorzugsweise im Bereich einander in Achsrichtung der Hauptachse 14 entgegengesetzt orientierten Seiten des Stützkörpers 13 an oder in dem Stützkörper 13 drehgelagert. Die Drehantriebsstränge 15a, 15b sind zweckmäßigerweise wellenförmig ausgebildet und tauchen mit je einem endseitigen Wellenstutzen 16 in den Stützkörper 13 ein, wobei zwischen jedem Wellenstutzen 16 und dem Stützkörper 13 eine Drehlagereinrichtung 17 eingeschaltet ist, die zweckmäßigerweise sowohl als Radiallagerung als auch als Axiallagerung ausgebildet ist. Die Drehlagereinrichtungen 17 sind insbesondere in Form von Wälzlagereinrichtungen ausgebildet.

Mit dem dem Wellenstutzen 16 entgegengesetzten Endbereich voraus taucht jeder Drehantriebsstrang 15a, 15b in ein Lagergehäuse 18 der für seinen Drehantrieb verantwortlichen ersten bzw. zweiten Drehantriebseinrichtung 11a, 11b ein. Innerhalb des Lagergehäuses 18 steht der betreffende Drehantriebsstrang 15a, 15b mit einem rotativ antreibbaren Abtriebsteil 19 der betreffenden Drehantriebseinrichtung 11a, 11b in Antriebsverbindung.

Vorzugsweise sind die beiden Drehantriebseinrichtungen 11a, 11b von elektrisch betätigbarer Art. Exemplarisch enthalten sie jeweils einen vorzugsweise als Servomotor ausgebildeten Elektromotor 22, der mit dem Abtriebsteil 19 und somit dem zugeordneten Drehantriebsstrang 15a, 15b antriebsmäßig gekoppelt ist. Beispielsweise kann innerhalb des Lagergehäuses 18 ein Zahnradgetriebe oder ein Riemengetriebe vorhanden sein, durch das der Elektromotor 22 mit oder ohne Übersetzung mit dem zugeordneten Drehantriebsstrang 15a, 15b antriebsmäßig gekoppelt ist.

Die beiden Elektromotoren 22 und mithin die beiden Drehantriebseinrichtungen 11a, 11b sind vorzugsweise unabhängig voneinander betreibbar, so dass auch die beiden Drehantriebsstränge 15a, 15b unabhängig voneinander rotativ antreibbar sind.

Die Drehantriebseinrichtungen 11a, 11b und die Drehantriebsstränge 15a, 15b bilden Komponenten von Antriebsmitteln 23, die das schon erwähnte Verlagern und Positionieren des Endeffektorträgers 13 bewirken können. Allerdings wirken die Antriebsmittel 23 nicht direkt auf den Endeffektorträger 3 ein, sondern unter Zwischenschaltung einer sich aus einem ersten und zweiten Knickarm 24a, 24b zusammensetzenden Knickarmstruktur.

Jeder Knickarm 24a, 24b ist zweischenkelig aufgebaut und enthält einen als Innenschenkel 25 bezeichneten ersten Schenkel sowie einen als Außenschenkel 26 bezeichneten zweiten Schenkel. Über je ein Zwischengelenk 27, das eine zu der Hauptachse 14 parallele Zwischengelenkachse 28 definiert, ist jeder Innenschenkel 25 mit dem ihm zugeordneten Außenschenkel 26 gelenkig verbunden.

Der Innenschenkel 25 des ersten Knickarmes 24a ist an einer zu dem Zwischengelenk 27 beabstandeten Stelle drehfest mit dem ersten Drehantriebsstrang 15a verbunden, so dass er bei einer Rotation des ersten Drehantriebsstranges 15a gemäß Doppelpfeil 29a um die Hauptachse 14 verschwenkt wird.

In vergleichbarer Weise ist der Innenschenkel 25 des zweiten Knickarmes 24b an einer zum Zwischengelenk 27 beabstandeten Stelle derart drehfest mit dem zweiten Drehantriebsstrang 15b verbunden, dass er bei der Rotation des zweiten Drehantriebsstranges 15b gemäß Doppelpfeil 29b ebenfalls um die Hauptachse 14 verschwenkt wird.

Die beiden Innenschenkel 25 haben also eine von der Hauptachse 14 gebildete gemeinsame Schwenkachse, bezüglich der sie unabhängig voneinander verschwenkbar sind.

Jeder Außenschenkel 26 der beiden Knickarme 24a, 24b ist über ein zum zugeordneten Zwischengelenk 27 beabstandetes Außengelenk 32a, 32b an dem Endeffektorträger 3 schwenkbeweglich gelagert. Vorzugsweise ist dabei jedem Außenschenkel 26 ein eigenes Außengelenk 32a, 32b zugeordnet. Die Gelenkachse 32 des Außengelenkes 32a, 32b verläuft parallel zu den Zwischengelenkachsen 28 und zu der Hauptachse 14.

Prinzipiell wäre es denkbar, die beiden Außenschenkel über ein gemeinsames Außengelenk am Endeffektorträger 3 anzulenken, wobei allerdings auch hier eine voneinander unabhängige Schwenkbeweglichkeit zwischen jedem Außenschenkel 26 und dem Endeffektorträger 3 gewährleistet wird.

Die separate Ausgestaltung der Außengelenke 32a, 32b ist vor allem dann von Vorteil, wenn - wie beim Ausführungsbeispiel - die beiden Knickarme 24a, 24b mit in Achsrichtung der Hauptachse 14 gemessenem Abstand zueinander angeordnet sind. Beispielhaft befindet sich der erste Knickarm 24a an der der ersten Drehantriebseinrichtung 11a zugewandten Seite des Stützkörpers 13, während der zweite Knickarm 24b auf der der zweiten Drehantriebseinrichtung 11b zugewandten Seite des Stützkörpers 13 angeordnet ist. Auf diese Weise ist der Stützkörper 13, bezogen auf die Achsrichtung der Hauptachse 14, zwischen den beiden Knickarmen 24a, 24b und insbesondere zwischen den Innenschenkeln 25 dieser beiden Knickarme 24a, 24b angeordnet.

Die Gelenkachsen 33 der beiden Außengelenke 32a, 32b können prinzipiell zusammenfallen, sind jedoch beim Ausführungsbeispiel beabstandet zueinander angeordnet. Sie befinden sich insbesondere im Bereich einander entgegengesetzter Seitenflächen des Endeffektorträgers 3.

Wie schon erwähnt wurde, erfährt der Endeffektorträger 3 quer zu der Handhabungsebene 4 eine ständige Abstützung durch die Abstützeinrichtung 12. Diese Abstützeinrichtung 12 enthält außer dem Stützkörper 13 auch noch eine Linearführungseinrichtung 34, unter deren Mitwirkung der Endeffektorträger 3 in einer bezüglich der Hauptachse 14 radialen Richtung linear verschiebbar an dem Stützkörper 13 gelagert ist. Auf diese Weise ist der Endeffektorträger 3 bezüglich dem Stützkörper 13 derart zwangsgeführt, dass er relativ zum Stützkörper 13 lediglich eine bezüglich der Hauptachse 14 radiale Linearbewegung 35 ausführen kann, die in der Zeichnung durch einen Doppelpfeil illustriert ist. Im Rahmen dieser radialen Linearbewegung 35 kann sich der Endeffektorträger 3 je nach Bewegungsrichtung entweder von dem im Zentrum angeordneten Stützkörper 13 entfernen oder an diesen Stützkörper 13 annähern.

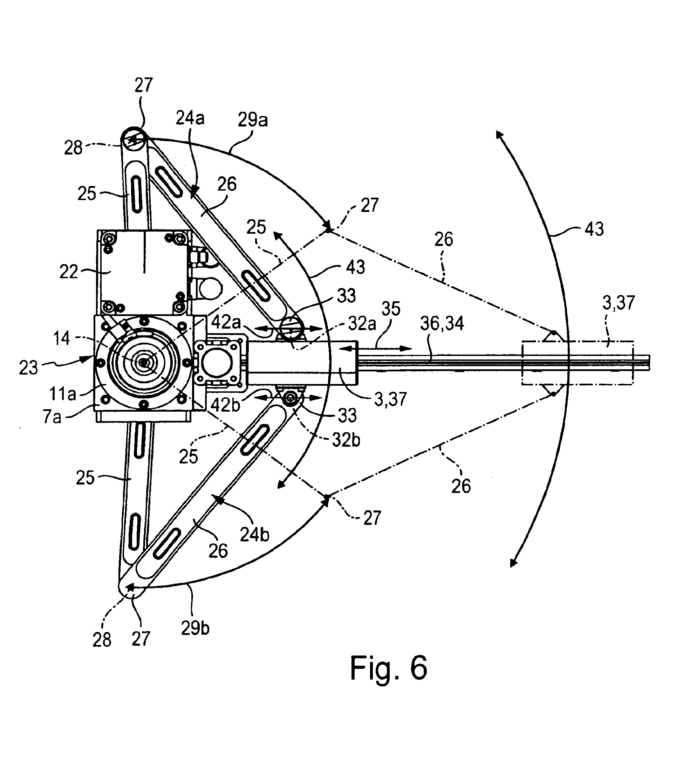

In Figur 3 ist in durchgezogenen Linien eine vollständig an den Stützkörper 13 angenäherte Innenposition des Endeffektorträgers 3 gezeigt, während in strichpunktierten Linien eine maximal ausgefahrene und mithin weitestmöglich radial vom Stützkörper 3 entfernte Außenposition des Endeffektorträgers 3 angedeutet ist. Eine entsprechende Anordnung ist in Figur 6 in Draufsicht illustriert.

Es ist an dieser Stelle nochmals zu betonen, dass der Stützkörper 13 relativ zu den Innenschenkeln 25 beider Knickarme 24a, 24b frei drehbar an den Drehantriebssträngen 15a, 15b gelagert ist. Die Drehposition des Stützkörpers 13 wird demzufolge nicht direkt, sondern nur indirekt, unter Vermittlung der Knickarme 24a, 24b, von den Drehantriebssträngen 15a, 15b beeinflusst.

Vorzugsweise enthält die Linearführungseinrichtung 34 wenigstens zwei relativ zueinander verschiebbar miteinander in Führungseingriff stehende Linearführungskomponenten, von denen die eine vorzugsweise als Führungsschiene 36 und die andere als die Führungsschiene 36 zumindest partiell umgreifender Führungsschuh 37 ausgebildet sind. Die Führungsschiene 36 erstreckt sich in der Handhabungsebene 4 oder in einer dazu parallelen Ebene und zwar in einer zur Hauptachse 14 radialen Richtung.

Bei dem in durchgezogenen Linien abgebildeten Ausführungsbeispiel ist die Führungsschiene 36 derart ortsfest am Stützkörper 13 angeordnet, dass sie ausgehend von diesem auslergerartig nach radial außen wegragt. Der Führungsschuh 37, der in diesem Fall am Endeffektorträger 3 angeordnet oder ein unmittelbarer Bestandteil des Endeffektorträgers 3 ist, kann sich entlang der Führungsschiene 36 verlagern, wodurch der Endeffektorträger 3 die Möglichkeit zur Ausführung seiner radialen Linearbewegung 35 hat.

Bei dem abgebildeten vorteilhaften Ausführungsbeispiel ist der Führungsschuh 37 in den Endeffektorträger 3 integriert, wobei der Endeffektorträger 3 von einem Führungskanal 38 durchsetzt ist, durch den die Führungsschiene 36 hindurchgreift.

Der Führungsschuh 37 verfügt über mehrere von entgegengesetzten Seiten her an der Führungsschiene 36 anliegende Führungselemente 39, bei denen es sich um Gleitführungselemente und/oder um Wälzführungselemente handeln kann, die jedenfalls so ausgebildet sind, dass sie eine leichtgängige radiale Linearbewegung 35 des Endeffektorträgers 3 bezüglich der Führungsschiene 36 ermöglichen und dennoch die geforderte Querabstützung in Achsrichtung der Hauptachse 14 gewährleisten.

Exemplarisch sind die Führungselemente 39 im Innern des Führungskanals 38 am Führungsschuh 37 bzw. am Endeffektorträger 3 angeordnet.

Eine in Figur 3 nur gestrichelt angedeutete alternative Bauform sieht vor, dass die Führungsschiene 36 ortsfest am Endeffektorträger 3 angeordnet ist und sich der Führungsschuh 37 am Stützkörper 13 befindet oder ein unmittelbarer Bestandteil des Stützkörpers 13 ist. Hier macht dann die Führungsschiene 36 die radiale Linearbewegung 35 des Endeffektorträgers 3 relativ zum Stützkörper 13 mit. Der Führungskanal 38 und die vorzugsweise vorhandenen Führungselemente 39 sind in diesem Fall am Stützkörper 13 angeordnet, wobei die Möglichkeit besteht, dass die Führungsschiene 36 den Stützkörper 13 in bezüglich der Hauptachse 14 radialer Richtung linear verschieblich durchsetzt. Je weiter sich hierbei der Endeffektor 3 an seine Innenposition annähert, umso weiter ragt die Führungsschiene 36 an der dem Endeffektorträger 3 entgegengesetzten Seite aus dem Stützkörper 13 heraus.

Es versteht sich, dass die Linearführungseinrichtung 34 auch mit einer Mehrfachanordnung von Führungsschienen 36 und/oder Führungsschuhen 37 ausgestattet sein kann.

Durch Betätigung wahlweise nur eines oder beider Knickarme 24a, 24b lässt sich der Endeffektorträger 3 innerhalb der Handhabungsebene 4 mit beliebigem Bahnverlauf verlagern, wobei der gewählte Bahnverlauf im Folgenden auch als Handhabungsbahn bezeichnet wird.

Durch entsprechende Betätigung der beiden Drehantriebseinrichtungen 11a, 11b lässt sich jeder Innenschenkel 25 unabhängig vom jeweils anderen Innenschenkel 25 zu einer Schwenkbewegung 29a bzw. 29b veranlassen, wobei das Zentrum der Schwenkbewegung auf der Hauptachse 14 liegt. Das entsprechende Verschwenken eines Innenschenkels 25 führt dazu, dass das zugeordnete Zwischengelenk 27 auf einer Kreisbahn verlagert wird. Dies wiederum führt dazu, dass der über das Zwischengelenk 27 jeweils angekoppelte Außenschenkel 26 eine Antriebskraft erfährt, die zur Folge hat, dass das ihm zugeordnete Außengelenk 32a bzw. 32b eine durch einen Doppelpfeil kenntlich gemachte Linearbewegung 42a bzw. 42b in bezüglich der Hauptachse 14 radialer Richtung ausführt.

Werden beide Innenschenkel 25 gleichzeitig mit gleicher Geschwindigkeit und mit einander entgegengesetzten Richtungssinn verschwenkt, hat dies zur Folge, dass der Endeffektorträger 3 ausschließlich eine radiale Linearbewegung 35 ausführt, ohne seine Winkelposition bezüglich der Hauptachse 14 zu verändern. Entsprechend dem gewählten Schwenkrichtungssinn der Innenschenkel 25 bewegt sich der Endeffektorträger 3 dabei entweder von der Hauptachse 14 weg oder in Richtung auf die Hauptachse 14 zu. Bei dieser Linearbewegung erfährt der End-effektorträger 3 eine ständige Abstützung durch die Linearführungseinrichtung 34 und den Stützkörper 13.

Werden die beiden Innenschenkel 25 durch entsprechende Betätigung der Drehantriebseinrichtungen 11a, 11b gleichzeitig mit gleicher Geschwindigkeit und gleichem Richtungssinn verschwenkt, führt auch der Endeffektorträger 3 eine reine Schwenkbewegung 43 um die Hauptachse 14 aus, wobei sein radialer Abstand zu der Hauptachse 14 konstant bleibt. Je nach Schwenkrichtung der Innenschenkel 25 wird der Endeffektorträger 3 dabei im Uhrzeigersinn oder entgegen dem Uhrzeigersinn verschwenkt.

Auch bei dieser reinen Schwenkbewegung erfährt der Endeffektorträger 3 eine ständige Abstützung durch die Abstützeinrichtung 12, weil selbige die Schwenkbewegung des Endeffektorträgers 3 uneingeschränkt mitmachen kann. Genauer gesagt wird dabei durch den Endeffektorträger 3 ein Drehmoment in die Führungsschiene 36 eingeleitet, so dass selbige, zusammen mit dem an ihr angeordneten Stützkörper 13, um die Hauptachse 14 verschwenkt wird.

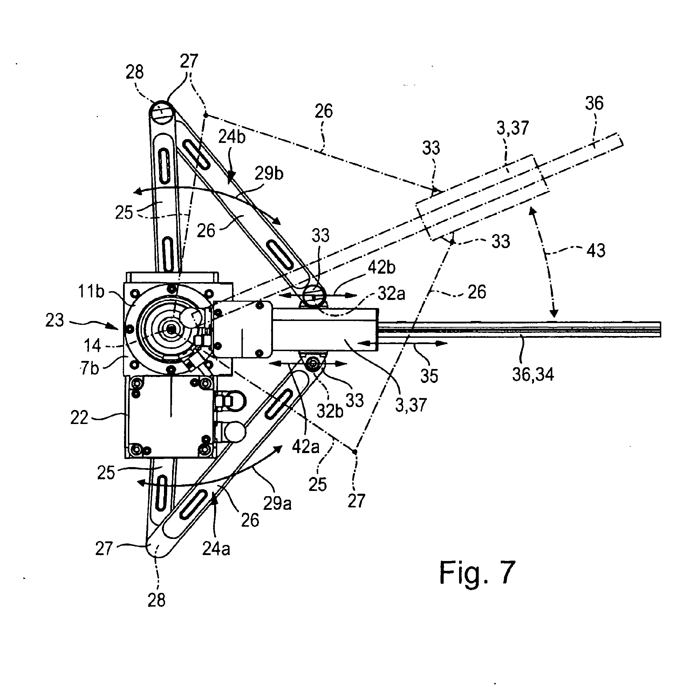

Indem momentan nur einer der beiden Innenschenkel 25 verschwenkt wird, oder indem die beiden Innenschenkel mit unterschiedlicher Geschwindigkeit gleichsinnig oder gegensinnig verschwenkt werden, lässt sich der Endeffektorträger 3 entlang einer beliebigen Handhabungsbahn verlagern, die sich aus einer überlagerten Schwenkbewegung 43 und radialen Linearbewegung 35 des Endeffektorträgers 3 zusammensetzt. Ein Zwischenstadium einer solchen asymmetrischen Handhabungsbewegung ist in Figur 7 strichpunktiert ersichtlich, gemäß der die beiden Innenschenkel 25, beginnend mit ihrer die Innenposition des Endeffektorträgers 3 bewirkenden Ausgangsstellung um voneinander abweichende Schwenkwinkel verschwenkt worden sind.

Auch bei jeder sich aus einer überlagerten Schwenkbewegung 43 und radialen Linearbewegung 35 des Endeffektorträgers 3 ergebenden Handhabungsbewegung erfolgt eine ständige Abstützung des Endeffektorträgers 3 durch die Abstützeinrichtung 12, weil sich der Endeffektorträger 3 stets uneingeschränkt linear entlang der Führungsschiene 36 bewegen kann und darüber hinaus die Führungsschiene 36 in der Lage ist, zusammen mit dem Stützkörper 13 um die Hauptachse 14 zu verschwenken. Entsprechendes gilt auch für die in Figur 3 angedeutete Variante, bei der die Führungsschiene 36 die radiale Linearbewegung 35 mitmacht.

Zweckmäßigerweise sind die beiden Innenschenkel 25 untereinander gleich lang ausgebildet, und auch die Außenschenkel 26 sind untereinander gleich lang ausgebildet. Es kann ferner vorteilhaft sein, wenn die Innenschenkel 25 das gleiche Längenmaß wie die Außenschenkel 26 aufweisen. Die Länge ist hierbei jeweils gemessen zwischen den zugeordneten Schwenk- bzw. Gelenkachsen.

Abweichend vom Ausführungsbeispiel wäre es aber prinzipiell möglich, die diversen Schenkel 25, 26 auch mit untereinander verschiedener Länge auszuführen.

Die Handhabungsvorrichtung 1 kann in einer Weise ausgebildet sein, dass der Endeffektorträger 3 ausschließlich innerhalb der Handhabungsebene 4 verlagerbar ist. Das Einsatzfeld der Handhabungsvorrichtung kann jedoch dadurch erweitert werden, dass der Endeffektorträger 3 zusätzlich auch noch in der z-Richtung, also in Achsrichtung der Hauptachse 14 und mithin rechtwinkelig zu der Handhabungsebene 4 bewegbar ist. Indem diese, im Folgenden als Hubbewegung 44 bezeichnete Bewegung überlagert zu der radialen Linearbewegung 35 und/oder zu der Schwenkbewegung 43 ausgeführt wird, lässt sich der Endeffektorträger 3 entlang einer beliebigen räumlichen Handhabungsbahn dreidimensional verlagern. Um diese Funktionalität zu gewährleisten, ist die Handhabungsvorrichtung 1 zweckmäßigerweise so ausgebildet, dass die Abstützeinrichtung 12, die Knickarme 24a, 24b und der Endeffektorträger 3 zu einer Hubeinheit 45 zusammengefasst sind, die insgesamt in Achsrichtung der Hauptachse 14 verschiebbar ist, und zwar unabhängig von momentanen Positioniermaßnahmen, die eine Verlagerung des Endeffektorträgers 3 in der Handhabungsebene 4 zur Folge haben. Abgesehen von den schon erwähnten überlagerten Bewegungen besteht hier unter anderem auch die Möglichkeit, den End-effektorträger 3 rein gleichgerichtet mit der Hauptachse 14 zu bewegen, ohne dass er seinen Abstand und seine Winkelstellung bezüglich der Hauptachse 14 verändert.

Um die Hubbewegung 44 zu erzeugen, ist die Handhabungsvorrichtung 1 exemplarisch mit zwei Hubantrieben 46a, 46b ausgestattet, wobei prinzipiell jedoch schon ein einziger Hubantrieb ausreichen würde, um die Hubbewegung 44 zu erzeugen.

Ein erster Hubantrieb 46a ist zweckmäßigerweise mit der ersten Drehantriebseinrichtung 11a zu einer ersten Antriebsbaugruppe 47a zusammengefasst. In vergleichbarer Weise bilden die zweite Drehantriebseinrichtung 11b und ein zweiter Hubantrieb 46b zweckmäßigerweise eine zweite Antriebsbaugruppe 47b. Die Abstützeinrichtung 12 sitzt zusammen mit dem Endeffektorträger 3 zwischen den beiden Antriebsbaugruppen 47a, 47b.

Jeder Hubantrieb 46a, 46b ist mit einem stationären Teil 48, bei dem es sich insbesondere um das Gehäuse des betreffenden Hubantriebes 46a, 46b handelt, am Lagergehäuse 18 der zugeordneten Drehantriebseinrichtung 11a, 11b angebracht. Jeder Hubantrieb 46a, 46b verfügt darüber hinaus über ein linear bewegliches Antriebsteil 49, das über einen Mitnehmer 50 mit dem zugeordneten ersten bzw. zweiten Drehantriebsstrang 15a, 15b antriebsmäßig gekoppelt ist. Diese antriebsmäßige Kopplung erfolgt dergestalt, dass in Achsrichtung der Hauptachse 14 eine Mitnahmeverbindung vorliegt, bezüglich der Hauptachse 14 als Drehachse jedoch ein uneingeschränkter rotativer Freiheitsgrad vorhanden ist. Mit anderen Worten kann also jeder Drehantriebsstrang 15a, 15b relativ zu dem mit ihm gekoppelten Mitnehmer 50 rotieren, wobei er aber gleichzeitig axial fest mit dem betreffenden Mitnehmer 50 verbunden ist. Dies lässt sich relativ einfach über eine geeignete Radial-Axial-Kombinationslagerung verwirklichen.

Indem die beiden Drehantriebsstränge 15a, 15b beim Ausführungsbeispiel ebenfalls als Bestandteile der Hubeinheit 45 konzipiert sind, ist klar, dass eine durch einen Hubantrieb 46a oder 46b hervorgerufene lineare Antriebsbewegung des zugeordneten Antriebsteils 49 dazu führt, dass über den zwischengeschalteten Mitnehmer 50 auch der jeweils angekoppelte Drehantriebsstrang 15a oder 15b in Achsrichtung der Hauptachse 14 verlagert wird, was letztlich eine gesamthafte Verlagerung der Hubeinheit 45 in der z-Richtung zur Folge hat.

Um die Hubbewegung 44 zu ermöglichen, sind beim Ausführungsbeispiel die beiden Drehantriebsstränge 15a, 15b innerhalb des jeweils zugeordneten Lagergehäuses 18 nicht nur drehbar, sondern auch axial, in Achsrichtung der Hauptachse 14 verschiebbar gelagert. Da die Lagergehäuse 18 im Betrieb der Handhabungsvorrichtung 1 ortsfest verbleiben, hat dies beim Ausführungsbeispiel zur Folge, dass die beiden Drehantriebsstränge 15a, 15b je nach Verfahrrichtung der Hubbewegung 44 mehr aus dem einen oder anderen Lagergehäuse 18 herausragen. Selbstverständlich besteht abweichend hiervon auch die Möglichkeit, durch Wahl eines eine entsprechende Baulänge aufweisenden Lagergehäuses 18 dafür zu sorgen, dass der dem Stützkörper 13 entgegengesetzte Endabschnitt der Drehantriebsstränge 15a, 15b unabhängig von der momentan eingenommenen Axialposition durch das Lagergehäuse 18 zur unmittelbaren Umgebung hin abgeschirmt sind.

Die Wahl zweier parallel auf die Hubeinheit 45 einwirkender Hubantriebe 46a, 46b hat den Vorteil, dass zur Gewährleistung einer vergleichbaren Dynamik auf kleiner dimensionierte Hubantriebe zurückgegriffen werden kann. Darüber hinaus besteht die beim Ausführungsbeispiel ergriffene vorteilhafte Möglichkeit, für den ersten Hubantrieb 46a ein anderes Funktionsprinzip zu wählen als für den zweiten Hubantrieb 46b. Auf diese Weise können sich in ihren Vorteilen ergänzende Hubantriebe verwendet werden, wobei gleichzeitig prinzipbedingt vorhandene Nachteile eliminiert werden.

Vorzugsweise ist der erste Hubantrieb 46a ein pneumatischer Hubantrieb und der zweite Hubantrieb 46b ein elektrischer Hubantrieb. Der pneumatische Hubantrieb ist beispielhaft ein Pneumatikzylinder mit einem Zylindergehäuse als stationärer Teil 48 und einer Kolbenstange als Antriebsteil 49. Der elektrische Hubantrieb ist exemplarisch ein Spindelantrieb mit einem vorzugsweise als Servomotor ausgebildeten Elektroantrieb und einer Gewindestange als Antriebsteil 49, die über eine Spindelmutter mit dem Elektroantrieb antriebsmäßig gekoppelt ist.

Es versteht sich, dass auch andere Typen von fluidisch und/oder elektrisch betätigbaren Hubantrieben 46a, 46b verwendbar wären.

Exemplarisch ermöglicht der als Pneumatikantrieb ausgebildete erste Hubantrieb 46a die Aufnahme der Gewichtskraft der Hubeinheit 45, während der elektrische zweite Hubantrieb 46b für dynamische, kurzzeitige Verstellbewegungen und ein genaues axiales Positionieren zuständig ist. Wenn die Handhabungsvorrichtung 1, was die üblichste Betriebsweise anbelangt, mit vertikal ausgerichteter Hauptachse 14 betrieben wird, kann der pneumatische erste Hubantrieb 46a dazu verwendet werden, die Hubeinheit 45 auf dem jeweils gewünschten Höhenniveau zu halten, während der elektrische zweite Hubantrieb 46b vorwiegend dazu verwendet wird, das Höhenniveau der Hubeinheit 45 zu verändern. Der pneumatische erste Hubantrieb 46a fungiert beim Ausführungsbeispiel also quasi nur als Gewichtsausgleich für das Gewicht der Hubeinheit 45 einschließlich des daran angeordneten Endeffektors 5 und von dem Endeffektor 5 eventuell ergriffenen Gegenstandes. Die eigentliche Hubpositionierung übernimmt der elektrische zweite Hubantrieb 46b.

Ein Vorteil der beispielhaften Handhabungsvorrichtung 1 besteht darin, dass die beiden Drehantriebseinrichtungen 11a, 11b in Reihe angeordnet sind, was einen winkelmäßigen Arbeitsbereich des Endeffektorträgers 3 von vollen 360° um die Hauptachse 14 herum ermöglicht.

Die zusätzlich zu den beiden Knickarmen 24a, 24b vorhandene Abstützeinrichtung 12 bewirkt eine erhebliche Entlastung der Knickarme 24a, 24b und der diesen zugeordneten Gelenke, so dass auf Knickarme 24a, 24b geringen Gewichtes und auf kleinbauende Gelenkstrukturen zurückgegriffen werden. Auf diese Weise lassen sich hohe Arbeitsgeschwindigkeiten zum Verfahren des Endeffektorträgers 3 realisieren und es sind sehr große radiale Reichweiten des Endeffektorträgers 3 zwischen der Innenposition und der Außenposition realisierbar.

Die gesamten Antriebsmittel 23 können bei der beispielhaften Handhabungsvorrichtung 1 stationär verbleiben, machen also die diversen Bewegungen des Endeffektorträgers 3 nicht mit. Dies führt zu sehr geringen zu bewegenden Massen und einer hohen Dynamik bei der Positionierung des Endeffektorträgers 3 mit zugeordnetem Endeffektor 5.

In Bezug auf die Hubbewegung 44 ermöglicht die Doppelanordnung von Hubantrieben 46a, 46b, dass das vertikal zu bewegende und auch zu haltende Gewicht der Hubeinheit 45 durch einen pneumatischen Hubantrieb 46a stets ausgeglichen werden kann, so dass für die eigentliche Realisierung der Hubbewegung in z-Richtung auf einen sehr kleinbauenden elektrischen Hubantrieb 46b zurückgegriffen werden kann.

Festzuhalten bleibt, dass ungeachtet der vorhandenen Abstützeinrichtung 12 sämtliche Bewegungen des Endeffektorträgers 3 in der Handhabungsebene 4 ausschließlich durch das Zusammenwirken der beiden Knickarme 24a, 24b eindeutig definiert werden. Die Abstützeinrichtung 12 macht die Bewegungen des Endeffektorträgers 3 lediglich mit, indem sie mit dem Endeffektorträger 3 zwangsgekoppelt ist, und sie hat die alleinige Aufgabe, den Endeffektorträger 3 rechtwinkelig zur Handhabungsebene 4 in wenigstens einer und vorzugsweise in beiden Richtungen abzustützen, um die Knickarmstruktur zu entlasten.

## Patentansprüche

1. Handhabungsvorrichtung, mit zwei jeweils einen Innenschenkel (25) und einen über ein Zwischengelenk (27) daran angelenkten Außenschenkel (26) aufweisenden Knickarmen (24a, 24b), deren Innenschenkel (25) mit Antriebsmitteln (23) gekoppelt und durch diese Antriebsmittel (23) unabhängig voneinander zu Schwenkbewegungen um eine gemeinsame Hauptachse (14) antreibbar sind, wobei jeder Außenschenkel (26) über ein zum zugeordneten Zwischengelenk (27) beabstandetes Außengelenk (32a, 32b) an einem gemeinsam zugeordneten Endeffektorträger (3) angelenkt ist, derart, dass der Endeffektorträger (3) durch von den Antriebsmitteln (23) hervorgerufene Schwenkbewegungen eines oder beider Innenschenkel (25) in einer zu der Hauptachse (14) rechtwinkeligen Handhabungsebene (4) zweidimensional verlagerbar und positionierbar ist, **dadurch gekennzeichnet, dass** der Endeffektorträger (3) durch eine zusätzlich zu den Knickarmen (24a, 24b) vorhandene Abstützeinrichtung (12) quer zu der Handhabungsebene (4) abgestützt ist, wobei diese Abstützeinrichtung (12) einen relativ zu den Innenschenkeln (25) der Knickarme (24a, 24b) bezüglich der Hauptachse (14) frei drehbar gelagerten Stützkörper (13) aufweist und eine Linearführungseinrichtung (34) enthält, über die der Endeffektorträger (3) in bezüglich der Hauptachse (14) radialer Richtung linear verschiebbar an dem Stützkörper (13) gelagert ist.

2. Handhabungsvorrichtung nach Anspruch 1, **dadurch gekennzeichnet, dass** die Linearführungseinrichtung (34) mindestens eine sich radial bezüglich der Hauptachse erstreckende Führungsschiene (36) als erste Linearführungskomponente und mindestens einen Führungsschuh (37) als zweite Linearführungskomponente aufweist, wobei die beiden Linearführungskomponenten in Längsrichtung der Führungsschiene (36) relativ zueinander verschiebbar miteinander in Führungseingriff stehen und wobei die eine Linearführungskomponente am Stützkörper (13) und die andere Linearführungskomponente am Endeffektorträger (3) angeordnet ist.

3. Handhabungsvorrichtung nach Anspruch 2, **dadurch gekennzeichnet, dass** die Führungsschiene (36) ortsfest am Stützkörper (13) und der Führungsschuh (37) ortsfest am Endeffektorträger angeordnet ist, oder umgekehrt.

4. Handhabungsvorrichtung nach Anspruch 3, **dadurch gekennzeichnet, dass** die Führungsschiene (36) den Endeffektorträger (3) oder den Stützkörper (13) durchsetzt.

5. Handhabungsvorrichtung nach einem der Ansprüche 1 bis 4, **dadurch gekennzeichnet, dass** der Stützkörper (13) in Achsrichtung der Hauptachse (14) zwischen den Innenschenkeln (25) der beiden Knickarme (24a, 24b) angeordnet ist.

6. Handhabungsvorrichtung nach einem der Ansprüche 1 bis 5, **dadurch gekennzeichnet, dass** die Antriebsmittel (23) einen drehfest mit dem Innenschenkel (25) des einen, ersten Knickarmes (24a) verbundenen ersten Drehantriebsstrang (15a) und einen drehfest mit den Innenschenkel (25) des anderen, zweiten Knickarmes (24b) verbundenen zweiten Drehantriebsstrang (15b) aufweisen, wobei beide Drehantriebsstränge (15a, 15b) koaxial zur Hauptachse (14) verlaufen und mit der Hauptachse (14) als Drehachse unabhängig voneinander relativ zum Stützkörper (13) der Abstützeinrichtung (12) drehbar sind.

7. Handhabungsvorrichtung nach Anspruch 6, **dadurch gekennzeichnet, dass** der erste Drehantriebsstrang (15a) mit einer ersten Drehantriebseinrichtung (11a) und der zweite Drehantriebsstrang (15b) mit einer zweiten Drehantriebseinrichtung (11b) antriebsmäßig gekoppelt ist, wobei die beiden Drehantriebsstränge (15a, 15b) durch die Drehantriebseinrichtungen (11a, 11b) unabhängig voneinander rotativ antreibbar sind und wobei die beiden Drehantriebseinrichtungen (11a, 11b) zweckmäßigerweise von elektrisch betätigbarer Art sind und insbesondere jeweils einen Elektromotor, vorzugsweise einen Servomotor, enthalten.

8. Handhabungsvorrichtung nach Anspruch 6 oder 7, **dadurch gekennzeichnet, dass** die beiden Drehantriebsstränge (15a, 15b) unabhängig voneinander an dem Stützkörper (13) drehbar gelagert sind.

9. Handhabungsvorrichtung nach Anspruch 8, **dadurch gekennzeichnet, dass** jeder Drehantriebsstrang (15a, 15b) mit einem Wellenstutzen (16) in den Stützkörper (13) eintaucht, wobei jeder Wellenstutzen (16) mittels einer Drehlagereinrichtung (17), die insbesondere als Wälzlagereinrichtung ausgebildet ist, bezüglich dem Stützkörper (13) drehgelagert ist.

10. Handhabungsvorrichtung nach Anspruch 8 oder 9, **dadurch gekennzeichnet, dass** die beiden Drehantriebsstränge (15a, 15b) im Bereich einander in Achsrichtung der Hauptachse (14) entgegengesetzt orientierten Seiten des Stützkörpers (13) an oder in dem Stützkörper (13) drehgelagert sind, wobei sie zweckmäßigerweise von einander entgegengesetzten Seiten her jeweils in den Stützkörper (13) eintauchen.

11. Handhabungsvorrichtung nach einem der Ansprüche 6 bis 10, **dadurch gekennzeichnet, dass** jeder Drehantriebsstrang (15a, 15b) mit axialem Abstand zum Stützkörper (13) an einer zur Fixierung der Handhabungsvorrichtung (1) am Einsatzort dienenden Halteeinrichtung (7a, 7b) drehgelagert ist, wobei die Halteeinrichtung (7a, 7b) zweckmäßigerweise ein Bestandteil einer zum rotativen Antrieb des zugeordneten Drehantriebsstranges (15a, 15b) dienenden Drehantriebseinrichtung (11a, 11b) ist.

12. Handhabungsvorrichtung nach einem der Ansprüche 1 bis 11, **dadurch gekennzeichnet, dass** zumindest die Abstützeinrichtung (12), die Knickarme (24a, 24b) und der Endeffektorträger (3) zu einer gemeinsam in Achsrichtung der Hauptachse (14) verschiebbaren und positionierbaren Hubeinheit (45) zusammengefasst sind, derart, dass der Endeffektorträger (3) insgesamt dreidimensional verfahrbar und positionierbar ist.

13. Handhabungsvorrichtung nach Anspruch 12 in Verbindung mit einem der Ansprüche 6 bis 11, **dadurch gekennzeichnet, dass** die beiden Drehantriebsstränge (15a, 15b) ebenfalls Bestandteil der Hubeinheit (45) sind.

14. Handhabungsvorrichtung nach Anspruch 13 in Verbindung mit Anspruch 11, **dadurch gekennzeichnet, dass** jeder Drehantriebsstrang (15a, 15b) in der ihm zugeordneten Halteeinrichtung (7a, 7b) in Längsrichtung verschiebbar gelagert ist.

15. Handhabungsvorrichtung nach einem der Ansprüche 12 bis 14, **dadurch gekennzeichnet, dass** sie mindestens einen zur Erzeugung der Hubbewegung der Hubeinheit (45) dienenden Hubantrieb (46a, 46b) aufweist, der zweckmäßigerweise mit einer dem Antrieb eines Knickarmes (24a, 24b) dienenden Drehantriebseinrichtung (11a, 11b) zu einer Antriebsbaugruppe (47a, 47b) zusammengefasst ist, wobei ferner zweckmäßigerweise ein pneumatisch betätigter erster Hubantrieb (46a) und ein elektrisch betätigter zweiter Hubantrieb (46b) vorhanden ist.

## Claims

1. Handling device comprising two articulated arms (24a, 24b), each having an inner limb (25) and an outer limb (26) hinged to the former via an intermediate joint (27), the inner limbs (25) being coupled to drive means (23) and capable of being driven by these drive means (23) to perform pivoting movements independently of each other about a common main axis (14), wherein each outer limb (26) is hinged to a jointly assigned end effector support (3) via an outer joint (32a, 32b) arranged at a distance from the associated intermediate joint (27) in such a way that the end effector support (3) can be displaced and positioned in two dimensions in a handling plane (4) perpendicular to the main axis (14) by pivoting movements of one or both of the inner limbs (25) caused by the drive means (23), **characterised in that** the end effector support (3) is supported at right angles to the handling plane (4) by a supporting device (12) provided in addition to the articulated arms (24a, 24b), this supporting device (12) comprising a support body (13) which is rotatably mounted with respect to the main axis (14) relative to the inner limbs (25) of the articulated arms (24a, 24b) and which comprises a linear guide device (34) by way of which the end effector support (3) is mounted on the support body (13) in a manner which allows its linear displacement with respect to the main axis (14) in the radial direction.

2. Handling device according to claim 1, **characterised in that** the linear guide device (34) comprises at least one guide rail (36) extending in the radial direction with respect to the main axis as a first linear guide component and at least one guide shoe (37) as a second linear guide component, wherein the two linear guide components are in guiding engagement with each other while being displaceable relative to each other in the longitudinal direction of the guide rail (36), and wherein one linear guide component is located on the support body (13) and the other linear guide component is located on the end effector support (3).

3. Handling device according to claim 2, **characterised in that** the guide rail (36) is fixed to the support body (13) and the guide shoe (37) is fixed to the end effector support or vice versa.

4. Handling device according to claim 3, **characterised in that** the guide rail (36) passes through the end effector support (3) or through the support body (13).

5. Handling device according to any of claims 1 to 4, **characterised in that** the support body (13) is arranged between the inner limbs (25) and the two articulated arms (24a, 24b).

6. Handling device according to any of claims 1 to 5, **characterised in that** the drive means (23) comprise a first rotary drive train (15a) which is non-rotatably connected to the inner limb (25) of the first articulated arm (24a) and a second rotary drive train (15b) which is non-rotatably connected to the inner limb (25) of the second articulated arm (24b), both rotary drive trains (15a, 15b) extending coaxial with the main axis (14) and being rotatable, with the main axis (14) as axis of rotation, independently of each other relative to the support body (13) of the supporting device (12).

7. Handling device according to claim 6, **characterised in that** the first rotary drive train (15a) is drive-coupled to a first rotary drive device (11 a) and the second rotary drive train (15b) is drive-coupled to a second rotary drive device (11 b), wherein the two rotary drive trains (15a, 15b) can be driven to rotate independently of each other by the rotary drive devices (11 a, 11 b) and wherein the two rotary drive devices (11a, 11b) are expediently of a type which is operated electrically, each in particular comprising an electric motor, preferably a servomotor.

8. Handling device according to claim 6 or 7, **characterised in that** the two rotary drive trains (15a, 15b) are rotatably mounted on the support body (12) independently of each other.

9. Handling device according to claim 8, **characterised in that** each of the rotary drive trains (15a, 15b) dips into the support body (13) with a stub shaft (16), each stub shaft (16) being mounted in a manner to be capable of rotation relative to the support body (13) by means of a pivot bearing device (17) which is in particular designed as a roller bearing device.

10. Handling device according to claim 8 or 9, **characterised in that** the two rotary drive trains (15a, 15b) are rotatably mounted on or in the support body (13) in the region of sides of the support body (13) which are oriented in opposite directions in the axial direction of the main axis (14), each expediently dipping into the support body (13) from opposite sides.

11. Handling device according to any of claims 6 to 10, **characterised in that** each rotary drive train (15a, 15b) is rotatably mounted at an axial distance from the support body (13) on a holding device (7a, 7b) used for securing the handling device (1) at the point of use, the holding device (7a, 7b) expediently being a part of a rotary drive device (11 a, 11 b) used for the rotary drive of the associated rotary drive train (15a, 15b).

12. Handling device according to any of claims 1 to 11, **characterised in that** at least the supporting device (12), the articulated arms (24a, 24b) and the end effector support (3) are combined to form a lifting unit (45) which can be jointly displaced and positioned in the axial direction of the main axis (14) in such a way that the end effector support (3) can as a whole be displaced and positioned in three dimensions.

13. Handling device according to claim 12 in combination with any of claims 6 to 11, **characterised in that** the two rotary drive trains (15a, 15b) are also a part of the lifting unit (45).

14. Handling device according to claim 13 in combination with claim 11, **characterised in that** each of the rotary drive trains (15a, 15b) is mounted in the associated holding device (7a, 7b) in a manner which allows displacement in the longitudinal direction.

15. Handling device according to any of claims 12 to 14, **characterised in that** is comprises at least one lifting drive (46a, 46b) for generating the lifting motion of the lifting unit (45), which lifting drive is expediently combined with a rotary drive device (11a, 11b) for the drive of an articulated arm (24a, 24b) to form a drive assembly (47a, 47b), wherein a pneumatically actuated first lifting drive (46a) and an electrically actuated second lifting drive (46b) are further expediently provided.

## Revendications

1. Dispositif de manipulation, comportant deux bras articulés (24a, 24b) présentant respectivement une branche intérieure (25) et une branche extérieure (26) articulée contre celle-ci par l'intermédiaire d'une articulation intermédiaire (27), dont les branches intérieures (25) sont couplées à des moyens d'entraînement (23) et peuvent être entraînées par lesdits moyens d'entraînement (23) indépendamment les unes des autres en mouvements de pivotement autour d'un axe principal (14) commun, sachant que chaque branche extérieure (26) est articulée par l'intermédiaire d'une articulation extérieure (32a, 32b) tenue à distance par rapport à l'articulation intermédiaire (27) associée au niveau d'un support d'effecteur terminal (3) associé commun de telle manière que le support d'effecteur terminal (3) peut être déplacé et positionné de manière bidimensionnelle dans un plan de manipulation perpendiculaire par rapport à l'axe principal (14) par des déplacements par pivotement d'une ou de deux branches intérieures (25) provoqués par les moyens d'entraînement (23), **caractérisé en ce que** le support d'effecteur terminal (3) est soutenu de manière transversale par rapport au plan de manipulation (4) par un système de soutien (12) présent en complément des bras articulés (24a, 24b), sachant que ledit système de soutien (12) présente un corps d'appui (13) logé de manière à pouvoir tourner librement par rapport à l'axe principal (14), par rapport aux branches intérieures (25) des bras articulés (24a, 24b) et contient un système de guidage linéaire (34), sur lequel le support d'effecteur terminal (3) est logé sur le corps d'appui (13), de manière à pouvoir être coulissé linéairement dans la direction radiale par rapport à l'axe principal (14).

2. Dispositif de manipulation selon la revendication 1, **caractérisé en ce que** le système de guidage linéaire (34) présente au moins un rail de guidage (36) s'étendant radialement par rapport à l'axe principal en tant que première composante de guidage linéaire et au moins un patin de guidage (37) en tant que deuxième composante de guidage linéaire, sachant que les deux composantes de guidage linéaire se trouvent en prise de guidage l'une avec l'autre dans la direction longitudinale du rail de guidage (36), de manière coulissable l'une par rapport à l'autre et sachant que l'une des composantes de guidage linéaire est disposée sur le corps d'appui (13) et que l'autre composante de guidage linéaire est disposée sur le support d'effecteur terminal (3).

3. Dispositif de manipulation selon la revendication 2, **caractérisé en ce que** le rail de guidage (36) est disposé de manière stationnaire sur le corps d'appui (13), et **en ce que** le patin de guidage (37) est disposé de manière stationnaire sur le support d'effecteur terminal, ou l'inverse.

4. Dispositif de manipulation selon la revendication 3, **caractérisé en ce que** le rail de guidage (36) traverse le support d'effecteur terminal (3) ou le corps d'appui (13).

5. Dispositif de manipulation selon l'une quelconque des revendications 1 à 4, **caractérisé en ce que** le corps d'appui (13) est disposé dans la direction de l'axe de l'axe principal (14) entre les branches intérieures (25) des deux bras articulés (24a, 24b).

6. Dispositif de manipulation selon l'une quelconque des revendications 1 à 5, **caractérisé en ce que** les moyens d'entraînement (23) présentent une première chaîne cinématique rotative (15a) reliée de manière solidaire en rotation à la branche intérieure (25) du premier des bras articulés (24a) et une deuxième chaîne cinématique rotative (15b) reliée de manière solidaire en rotation à la branche intérieure (25) de l'autre deuxième bras articulé (24b), sachant que les deux chaînes cinématiques rotatives (15a, 15b) s'étendent de manière coaxiale par rapport à l'axe principal (14) et peuvent être tournées avec l'axe principal (14) en tant qu'axe de rotation indépendamment l'une de l'autre par rapport au corps d'appui (13) du système de soutien (12).

7. Dispositif de manipulation selon la revendication 6, **caractérisé en ce que** la première chaîne cinématique rotative (15a) est couplée à un premier système d'entraînement en rotation (11a), et **en ce que** la deuxième chaîne cinématique rotative (15b) est couplée en conformité avec l'entraînement à un deuxième système d'entraînement en rotation (11b), sachant que les deux chaînes cinématiques rotatives (15a, 15b) peuvent être entraînées de manière rotative indépendamment l'une de l'autre par les systèmes d'entraînement en rotation (11a, 11 b) et sachant que les deux systèmes d'entraînement en rotation (11a, 11b) sont de manière appropriée du type à actionnement électrique et contiennent en particulier respectivement un moteur électrique, de préférence un servomoteur.

8. Dispositif de manipulation selon la revendication 6 ou 7, **caractérisé en ce que** les deux chaînes cinématiques rotatives (15a, 15b) sont logées de manière à pouvoir tourner indépendamment l'une de l'autre sur le corps d'appui (13).

9. Dispositif de manipulation selon la revendication 8, **caractérisé en ce que** chaque chaîne cinématique rotative (15a, 15b) s'enfonce dans le corps d'appui (13) avec un manchon d'arbre (16), sachant que chaque manchon d'arbre (16) est logé de manière à pouvoir tourner par rapport au corps d'appui (13) au moyen d'un système de palier rotatif (17) réalisé en particulier en tant que système de palier à roulement.

10. Dispositif de manipulation selon la revendication 8 ou 9, **caractérisé en ce que** les deux chaînes cinématiques rotatives (15a, 15b) sont logées de manière à pouvoir tourner sur ou dans le corps d'appui (13) dans la zone de côtés du corps d'appui (13), orientés à l'opposé les uns par rapport aux autres dans la direction de l'axe de l'axe principal (14), sachant que lesdites chaînes cinématiques rotatives s'enfoncent respectivement de manière appropriée dans le corps d'appui (13) depuis des côtés opposés les uns aux autres.

11. Dispositif de manipulation selon l'une quelconque des revendications 6 à 10, **caractérisé en ce que** chaque chaîne cinématique rotative (15a, 15b) est logée de manière à pouvoir tourner au niveau d'un système de maintien (7a, 7b) servant à la fixation du dispositif de manipulation (1) sur le lieu d'utilisation, à distance axiale du corps d'appui (13), sachant que le système de maintien (7a, 7b) est de manière appropriée un composant d'un système d'entraînement en rotation (11a, 11b) servant à l'entraînement en rotation de la chaîne cinématique rotative (15a, 15b) associée.

12. Dispositif de manipulation selon l'une quelconque des revendications 1 à 11, **caractérisé en ce qu'**au moins le système de soutien (12), les bras articulés (24a, 24b) et le support d'effecteur terminal (3) sont regroupés pour former une unité de levage (45) pouvant être déplacée et positionnée dans la direction de l'axe de l'axe principal (14) de telle manière que le support d'effecteur terminal (3) peut être déplacé et positionné globalement de manière tridimensionnelle.

13. Dispositif de manipulation selon la revendication 12 en relation avec l'une quelconque des revendications 6 à 11, **caractérisé en ce que** les deux chaînes cinématiques rotatives (15a, 15b) font également partie de l'unité de levage (45).

14. Dispositif de manipulation selon la revendication 13 en relation avec la revendication 11, **caractérisé en ce que** chaque chaîne cinématique rotative (15a, 15b) est logée de manière à pouvoir coulisser dans la direction longitudinale dans le système de maintien qui lui est associé.

15. Dispositif de manipulation selon l'une quelconque des revendications 12 à 14, **caractérisé en ce qu'**il présente au moins un entraînement de levage (46a, 46b) servant à générer le mouvement de levage de l'unité de levage (45), lequel entraînement de levage est regroupé de manière appropriée à un système d'entraînement en rotation (11a, 11b) servant à entraîner un bras articulé (24a, 24b) pour former un module d'entraînement (47a, 47b), sachant qu'en outre un premier entraînement de levage (46a) à actionnement pneumatique et un deuxième entraînement de levage (46b) à actionnement pneumatique (46b) sont présents de manière appropriée.
